# EUROPEAN PATENT APPLICATION

(11) **EP 4 583 278 A1**
(43) Date of publication of application: **09.07.2025**
(21) Application number: 24208630.4
(22) Date of filing: 24.10.2024
(51) Int. Cl.: H01M 50/24, H01M 50/213

(54) **SECONDARY BATTERY MODULE**

(30) Priority: 05.01.2024 KR 20240002409
(71) Applicant: SAMSUNG SDI CO., LTD., Yongin-si, Gyeonggi-do 17084 (KR)
(72) Inventor: Lee, Jooyul, 17084 Yongin-si, Gyeonggi-do, (KR)
(74) Representative: Gulde & Partner

(57) **Abstract**

A secondary battery module may include a plurality of cylindrical cells, a cell holder holding the plurality of cylindrical cells, and a first case accommodating the plurality of cylindrical cells and the cell holder. The first case may include an open side, wherein potting material may be applied to at least a portion of top surfaces of the plurality of cylindrical cells and a surface of the cell holder to seal the plurality of cylindrical cells and the cell holder.

## Description

### BACKGROUND

### 1. Field

The present disclosure relates to a secondary battery module and, more particularly, to a secondary battery module in which potting material is applied to seal a plurality of cylindrical cells and a cell holder.

### 2. Description of the Related Art

Unlike primary batteries that are not designed to be charged and/or recharged, secondary (e.g., rechargeable) batteries are batteries that are designed (e.g., intended) to be discharged and recharged. Lower-capacity secondary batteries are utilized in portable, small electronic devices, such as smart phones, feature phones, notebook computers, digital cameras, and camcorders, while largercapacity secondary batteries are widely utilized as power sources for driving motors in hybrid vehicles and electric vehicles, and for storing power (e.g., home and/or utility scale power storage). A secondary battery generally includes an electrode assembly that includes a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

During use of a secondary battery, corrosion may occur in the secondary battery cells due to certain factors, such as long-term utilization, exposure to high temperature/high humidity environments, temperature changes, and condensation. However, existing secondary battery modules have a structure that may not completely prevent or reduce moisture from entering through the outer casing, which makes it difficult to prevent or reduce corrosion of the secondary battery cells, and therefore reduces the long-term reliability. Therefore, it is desirable to design a secondary battery module that overcomes these problems.

The present invention is set out in the appended set of claims. The embodiments of the present disclosure relate to a secondary battery module in which potting material is applied on at least a portion of the top surfaces of a plurality of cylindrical cells and a portion of the surface of a cell holder.

However, the technical problem to be solved by the present disclosure is not limited to the above problem, and other problems not necessarily mentioned herein, and aspects and features of the present disclosure that would address such problems, will be clearly understood by those skilled in the art from the description of the present disclosure.

To solve the above technical problem, a secondary battery module of the present disclosure includes a plurality of cylindrical cells, a cell holder holding the plurality of cylindrical cells, and a first case accommodating the plurality of cylindrical cells and the cell holder. The first case includes an open side, wherein potting material is applied to at least a portion of top surfaces of the plurality of cylindrical cells and a surface of the cell holder to seal the plurality of cylindrical cells and the cell holder. The portion of top surfaces of the plurality of cylindrical cells and the surface of the cell holder may refer to only some of the top surfaces of the plurality of cylindrical cells and the surface of the cell holder or may refer to every of the top surfaces of the plurality of cylindrical cells and the surface of the cell holder. In other words, only some of the cylindrical cells or each of the cylindrical cells may be covered by the potting material. In some embodiments, only the outermost cylindrical cells of the plurality of cylindrical cells may be covered by the potting material. For example, cylindrical cells arranged in a middle section of the plurality of battery cells may not be covered by the potting material. The potting material may be applied to at least a portion of at least 50 percent, preferably of at least 75 percent of the top surfaces of the plurality of cylindrical cells and the surface of the cell holder to seal the plurality of cylindrical cells and the cell holder. For example, the potting material may be applied to the entire portion of the top surfaces of the plurality of cylindrical cells and a surface of the cell holder to seal the plurality of cylindrical cells and the cell holder. In other words, the potting material may entirely cover the top surfaces of the plurality of cylindrical cells and the surface of the cell holder. Advantageously, corrosion of the cylindrical cells may be effectively prevented without having to perform a tubing process on the cylindrical cells, thereby simplifying the process and reducing the cost of performing the tubing process.

According to one or more embodiments, a secondary battery module may include: a plurality of cylindrical cells; a cell holder holding the plurality of cylindrical cells; and a first case accommodating the plurality of cylindrical cells and the cell holder, the first case including an open side, wherein potting material is applied to at least a portion of top surfaces of the plurality of cylindrical cells and a surface of the cell holder to seal the plurality of cylindrical cells and the cell holder.

The cell holder may include a plurality of open areas through which at least a portion of the top surfaces of the plurality of cylindrical cells are accommodated in the first case, and the potting material is applied to the plurality of open areas to seal a gap between the plurality of cylindrical cells and the cell holder. For example, the plurality of open areas may be configured such that each top surface of the plurality of cylindrical cells may be covered with the potting material applied to the plurality of open areas. In an embodiment, the plurality of open areas may include one open area for each row of cylindrical cells or one open area for each cylindrical cell. In response to the application of the potting material to the top surfaces of the cylindrical cells, the potting material may be prevented from overflowing from the first case. In addition, the side surfaces of the first case may be used to guide a proper amount of application of the potting material. In addition, the cylindrical cells may be sealed only with the lower case of the secondary battery module by using the potting material.

The potting material may seal a gap between the first case and the cell holder.

The potting material may include an insulating material. As a result, even in a case where any cylindrical cell is ignited, the ignition may be prevented from spreading to the adjacent cylindrical cells.

The top surfaces of the plurality of cylindrical cells may be lower than a side height of the first case. In other words, the side of the height of the first case may be configured to exceed the top surfaces of the plurality of cylindrical cells. The top surfaces of the plurality of cylindrical cells may be arranged to not protrude out of the first case when the plurality of cylindrical cells is disposed therein. For example, the plurality of cylindrical cells may be entirely disposed within the first case with respect to the height direction of the first case.

A side of the first case may include a first concave-convex portion, a portion of the cell holder in contact with the side of the first case may include a second concave-convex portion, and the first case and the cell holder may be coupled to each other by the first concave-convex portion of the first case and the second concave-convex portion of the cell holder. In other words, a side wall of the first case extending from a bottom of the first case along the height direction and/or defining an outer surface of the open side may include the first concave-convex portion. The terms "concave" and "convex" may not necessarily refer to rounded shapes only but also to substantially rectangular shapes which may thus also fall under the understanding of the "concave-convex" portion described herein. In other words, the first case may include a first engagement member and a portion of the cell holder in contact with the side of the first case may include a second engagement member and the first case and the cell holder may be coupled to each other by the first engagement member of the first case and the second engagement member of the cell holder.

The first concave-convex portion (or the first engagement member) may include a first recess and a first protrusion extending from the first recess, the second concave-convex portion (or the second engagement member) may include a second recess and a second protrusion extending from the second recess, and the first recess may be engaged and coupled the second protrusion, and the first protrusion may be engaged and coupled with the second recess. The first recess may be the space between an outer surface of the side wall of the first case and the first protrusion. The second recess may be the space between a surface of the cell holder facing the second protrusion and the second protrusion.

The first protrusion may face and may be parallel to a side surface of the first case, and the second protrusion is engaged with the first recess in a direction parallel to the first protrusion.

The secondary battery module may further include a battery management system, wherein the battery management system is connected to the plurality of cylindrical cells by (a first) wire bonding. The battery management system may be arranged in parallel to a side surface of the first case. In an embodiment, the battery management system may be arranged directly or indirectly on an outer side surface of the first case.

At least a portion of the (first) wire bonding may be in the applied potting material.

The secondary battery module may further include busbars electrically connected to the plurality of cylindrical cells, wherein the plurality of cylindrical cells may be connected to the busbars by (a second) wire bonding. Advantageously, damage to the cylindrical cells may be prevented, as opposed to the case where the cylindrical cells are joined by resistance welding, laser welding, or the like. In addition, a ventilation space for the cylindrical cells may be easily obtained, and in the case of ignition, heat generation, or the like, the bonding wires may act as a fuse to suppress heat transfer. The potting material may also be applied to the (first and/or second) wire bonding(s), thereby preventing corrosion of the bonding wires.

The cell holder may include guides configured to guide the busbars.

The (second) wire bonding may be in the applied potting material.

The first case may include a cell support at a bottom surface of the first case to support the plurality of cylindrical cells.

The cell support may include a plurality of recesses each configured to accommodate at least a portion of a corresponding cylindrical cell of the plurality of cylindrical cells, and the portion of the cylindrical cell includes a bottom surface of the cylindrical cell. In an embodiment, each of the recesses may be configured to entirely accommodate a corresponding cylindrical cell of the plurality of cylindrical cells.

The cell holder may include a plurality of fixing portions fixing or configured to fix the plurality of cylindrical cells, and an arrangement of the plurality of recesses corresponds to the arrangement of the plurality of fixing portions.

The secondary battery module may further include a second case coupled to the first case, and may be configured to close the open side of the first case.

Each of the plurality of cylindrical cells may be coated with a material including at least one of nickel (Ni) or tin (Sn). The materials may prevent corrosion of the cylindrical cell

According to one or more embodiments, a secondary battery pack may include the secondary battery module.

According to one or more embodiments, a vehicle may include the secondary battery module.

Accordingly, the lower case and the cell holder may be coupled to each other by the first concave-convex portion of the first (or lower) case and the second concave-convex portion of the cell holder, so that the first (or lower) case and the cell holder may be coupled to each other more firmly, and a stronger seal may be obtained from the potting material.

However, aspects and features of the present disclosure are not limited to those described above, and other aspects and features not mentioned will be clearly understood by a person skilled in the art from the detailed description, described.

### BRIEF DESCRIPTION OF DRAWINGS

The following drawings included together with this specification illustrate embodiments of the present disclosure, and further describe aspects and features of the present disclosure together with the detailed description of the present disclosure. Thus, the present disclosure should not be construed as being limited to what are shown in the drawings:
FIG. 1 illustrates an example of a secondary battery module according to one or more embodiments of the present disclosure;
FIG. 2 illustrates an exploded perspective view showing the secondary battery module according to one or more embodiments of the present disclosure;
FIG. 3 illustrates an example of the cylindrical cell according to one or more embodiments of the present disclosure;
FIG. 4 illustrates an example in which potting material is applied using an applicator according to one or more embodiments of the present disclosure;
FIG. 5 illustrates an example in which the potting material is applied according to one or more embodiments of the present disclosure;
FIG. 6 illustrates an example in which the cylindrical cells are sealed with the potting material according to one or more embodiments of the present disclosure;
FIG. 7 illustrates an example in which the cell holder is coupled to the lower case according to one or more embodiments of the present disclosure; and
FIG. 8 illustrates a schematic side view showing a vehicle according to one or more embodiments of the present disclosure.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure. The present disclosure covers all modifications, equivalents, and replacements within the idea and technical scope of the present disclosure. Further, each of the features of the various embodiments of the present disclosure may be combined with each other, in part or in whole, and technically various interlocking and driving are possible. Each embodiment may be implemented independently of each other or may be implemented together in an association.

In the drawings, the relative sizes of elements, layers, and regions may be exaggerated for clarity and/or descriptive purposes. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place.

Spatially relative terms, such as "beneath," "below," "lower," "lower side," "under," "above," "upper," "upper side," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

Further, the phrase "in a plan view" means when an object portion is viewed from above, and the phrase "in a schematic cross-sectional view" means when a schematic cross-section taken by vertically cutting an object portion is viewed from the side. The terms "overlap" or "overlapped" mean that a first object may be above or below or to a side of a second object, and vice versa. Additionally, the term "overlap" may include stack, face or facing, extending over, covering, or partly covering or any other suitable term as would be appreciated and understood by those of ordinary skill in the art. The expression "not overlap" may include meaning, such as "apart from" or "set aside from" or "offset from" and any other suitable equivalents as would be appreciated and understood by those of ordinary skill in the art. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a resistor, a capacitor, and/or the like. In describing embodiments, an expression of connection indicates electrical connection unless explicitly described to be direct connection, and "directly connected/directly coupled," or "directly on," refers to one component directly connecting or coupling another component, or being on another component, without an intermediate component.

In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to," may be construed similarly. It will be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of' when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the spirit and scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

In the examples, the x-axis, the y-axis, and/or the z-axis are not limited to three axes of a rectangular coordinate system, and may be interpreted in a broader sense. For example, the x-axis, the y-axis, and the z-axis may be perpendicular to one another, or may represent different directions that are not perpendicular to one another. The same applies for first, second, and/or third directions.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

When one or more embodiments may be implemented differently, a specific process order may be performed differently from the described order. For example, two consecutively described processes may be performed substantially at the same time or performed in an order opposite to the described order.

As used herein, the term "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

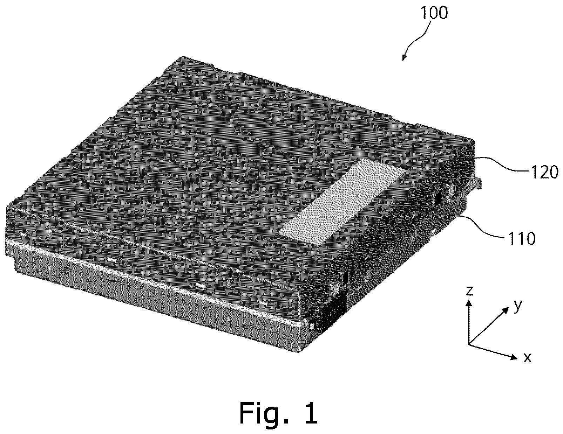

FIG. 1 illustrates an example of a secondary battery module 100 according to one or more embodiments of the present disclosure. The secondary battery module 100 may include a plurality of secondary battery cells (e.g., cylindrical cells) and a case 110 and 120 accommodating the plurality of secondary battery cells and/or the like.

The battery cell included in a battery module 100 may generate a large amount of heat during charging/discharging. The generated heat may be accumulated in the battery cell, thereby accelerating the deterioration of the battery cell. Accordingly, the battery pack including the battery module 100 may further include a cooling member to remove the generated heat and thereby suppress or reduce deterioration of the battery cell. The cooling member may be provided at the bottom portion of the accommodation space, where the battery cell is located but the present disclosure is not limited thereto and may be located at the top or side portion of the accommodation space depending on the battery pack.

The battery cell may be configured such that exhaust gas generated inside the battery cell under abnormal operating conditions, also known as thermal runaway or thermal events, is discharged to the outside of the battery cell. The battery pack or the battery module 100 may include an exhaust port for discharging the exhaust gas to prevent or reduce damage to the battery pack or the battery module 100 by the exhaust gas.

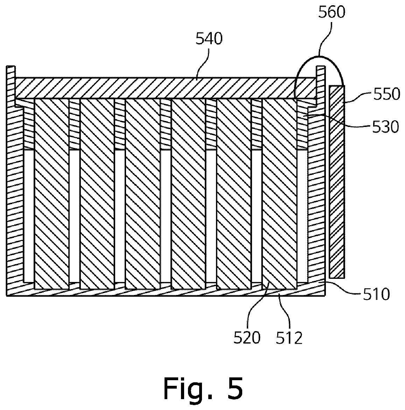

The battery pack (or the battery module 100) may include a battery and a battery management system (BMS) (e.g. battery management module 550 in FIG. 5) for managing the battery. The battery management system may include a detection device, a balancing device, and a control device. The battery module 100 may include a plurality of cells connected to each other in series and/or in parallel. The battery modules 100 may be connected to each other in series and/or in parallel.

The detection device may detect a state of a battery (e.g., voltage, current, temperature, and/or the like) to output state information indicating the state of the battery. The detection device may detect the voltage of each cell constituting the battery or the voltage of each battery module 100. The detection device may detect current flowing through each battery module 100 constituting the battery module 100 or the battery pack. The detection device may also detect the temperature of a cell and/or module on at least one point of the battery and/or an ambient temperature.

The balancing device may perform a balancing operation of a battery module 100 and/or cells constituting the battery module. The control device may receive state information (e.g., voltage, current, temperature, and/or the like) of the battery module from the detection device. The control device may monitor and calculate the state of the battery module 100 (e.g., voltage, current, temperature, state of charge (SOC), life span (e.g., state of health (SOH)), and/or the like) on the basis of the state information received from the detection device. In one or more embodiments, on the basis of the monitored state information, the control device may perform a control function (e.g., temperature control, balancing control, charge/discharge control, and/or the like) and a protection function (e.g., protection from over-discharge, over-charge, over-current protection, short circuit, fire extinguishing function, and/or the like). In one or more embodiments, the control device may perform a wired or wireless communication function with an external device of the battery pack (e.g., a higher-level controller or vehicle, charger, power conversion system, and/or the like).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions, and may calculate the charge/discharge state, calculate battery life or state of health (SOH). The battery management system may also cut off, if desired or necessary, battery power (e.g., relay control), control thermal management (e.g., cooling, heating, and/or the like), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if (or when) a problem occurs in the vehicle and the battery system, and may include one or more relays and pre-charge relays at the positive terminal and the negative terminal, respectively.

In the pre-charge control, there is a risk of inrush current occurring in the high-voltage capacitor on the input side of the inverter if (or when) the battery load is connected. Thus, to prevent or reduce inrush current if (or when) starting a vehicle, the pre-charge relay may be operated before connecting the main relay, and the pre-charge resistor may be connected.

The high-voltage interlock is a circuit that uses a small signal to detect whether or not all high-voltage parts of the entire vehicle system are connected and may have a function of forcibly opening a relay if (or when) an opening occurs at even one location on the entire loop.

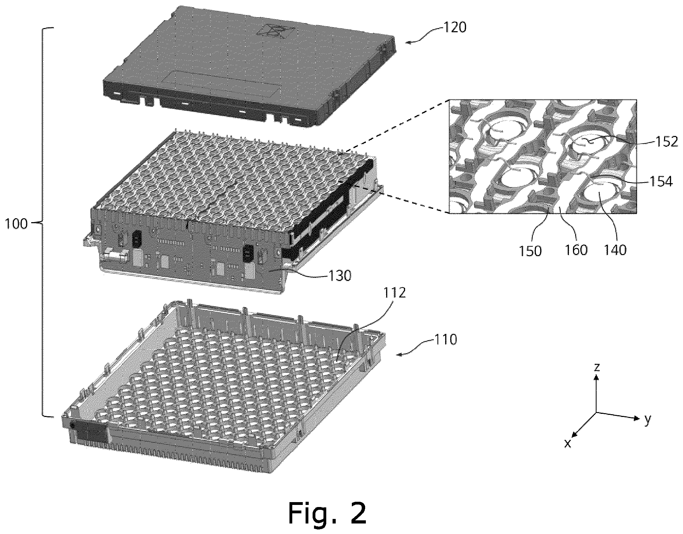

FIG. 2 illustrates an exploded perspective view showing the secondary battery module 100 according to one or more embodiments of the present disclosure. The secondary battery module 100 may include, but is not limited to: cylindrical cells 140; a first case 110 below the cylindrical cells 140; a second case 120 above the cylindrical cells 140 and coupled to the first case 110; a cell monitor 130, a cell holder 150 holding the cylindrical cells; and busbars 160. However, the present disclosure is not limited thereto and some feature may also be omitted, e.g. the second case 120, the cell monitor 130 and/or the busbars 160.

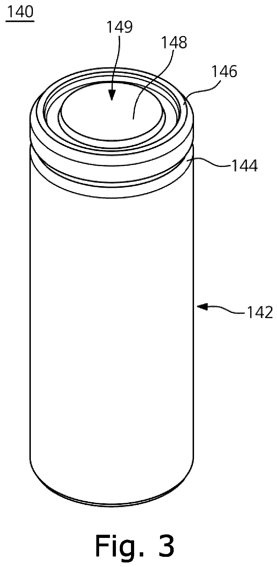

The cylindrical cells 140 may refer to a plurality of cylindrical cells included in the secondary battery module 100 unless otherwise specified, and the detailed structure of the cylindrical cells 140 will be described in more detail with reference to FIG. 3.

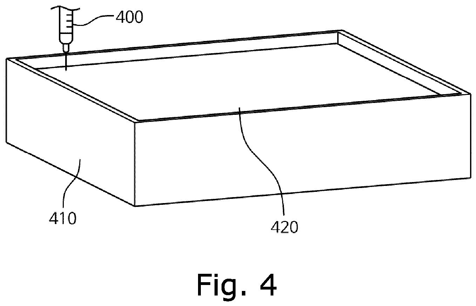

In one or more embodiments, one side of the first case 110 is open (e.g. towards a top side along the z-direction), and the first case 110 may accommodate the cylindrical cells 140, the cell holder 150, and the busbars 160. In some embodiments, the cylindrical cells 140 and the first case 110 may be manufactured so that the top surfaces of the cylindrical cells 140 are lower than the side height of the first case 110 in a state where the cylindrical cells 140 are coupled to the first case 110. In this manner, the cylindrical cells 140 may be accommodated in the first case 110, and the cylindrical cells 140 may be blocked and sealed from the outside by potting material, which will be described in more detail later with reference to FIG. 4. In one or more embodiments, the first case 110 may accommodate at least a portion of wires 154.

A cell support may be provided on the bottom surface within the first case 110 to support the cylindrical cells 140. For example, the cell support may include recesses 112 each configured to accommodate and support at least a portion of the corresponding cylindrical cell 140. For example, the recess 112 may receive and support a portion of the cylindrical cell 140 including the bottom surface of the cylindrical cell 140.

The second case 120 may be coupled to the first case 110 to tightly close the open side of the first case 110. As a result, the cylindrical cells 140 accommodated in the first case 110 may be blocked from external air or moisture, thereby preventing or reducing the corrosion of the cylindrical cells 140.

The cell monitor 130 may detect a state of a battery (e.g., voltage, current, temperature, and/or the like) to output state information indicating the state of the battery. The cell monitor 130 may detect the voltage of each cell constituting the battery or the voltage of each battery module. The cell monitor 130 may detect current flowing through each battery module constituting the battery module or the battery pack. The cell monitor 130 may also detect the temperature of a cell and/or module on at least one point of the battery and/or an ambient temperature.

In one or more embodiments, the cell monitor 130 may perform a balancing operation of a battery module and/or cells constituting the battery module.

The cell holder 150 may support the cylindrical cells 140. For example, the cell holder 150 may support the upper portions of the cylindrical cells 140 (e.g., in the +z direction).

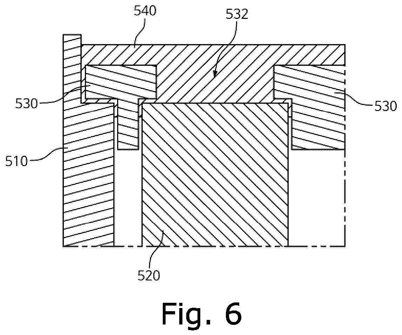

The cell holder 150 may be provided with open areas 152, each of which exposes at least a portion of the top surface of each of the cylindrical cells 140 accommodated in the first case 110. As will be described later with reference to FIG. 6 and/or the like, the potting material may be applied on the open areas 152 to seal gaps between the cylindrical cells 140 and the cell holder 150.

The cell holder 150 may include fixing portions configured to fix the cylindrical cells 140, and the arrangement of the recesses 112 may correspond to the arrangement of the fixing portions. As a result, the cylindrical cells 140 may be supported in a vertical direction (e.g., the z direction) by the recesses 112 and the fixing portions of the cell holder 150.

The busbars 160 may be positioned above the cell holder 150, and the cell holder 150 may include guides configured to guide the busbars 160. The busbars 160 may connect the cylindrical cells 140 in series and/or in parallel.

The busbars 160 may be electrically connected to the cylindrical cells 140. For example, the cylindrical cells 140 may be connected to the busbars 160 by wire bonding utilizing the wires 154. As a result, unlike a case where the cylindrical cells 140 are joined by resistance welding, laser welding, and/or the like, little to no damage may occur to the cylindrical cells 140. In one or more embodiments, a ventilation space for the cylindrical cells 140 may be obtained, and in the case of ignition, heat generation, and/or the like, the bonding wires may act as a fuse to suppress or reduce heat transfer.

FIG. 3 illustrates an example of the cylindrical cell 140 according to one or more embodiments of the present disclosure. As shown in FIG. 3, the cylindrical cells 140 according to one or more embodiments of the present disclosure may include a cylindrical can 142, an electrode assembly, and a cap assembly 149. In one or more embodiments, the cylindrical cells 140 may include a center pin. In the cylindrical cells 140 according to one or more embodiments of the present disclosure, the cap assembly 149 may also perform a current interruption operation and, thus, may sometimes be referred to as a current interrupt device (CID).

The cylindrical can 142 may have a substantially circular bottom portion and a cylindrical sidewall extending (e.g., extending a set or predetermined length) upwardly from a circumference (or a periphery) of the bottom portion. During the manufacturing process of the secondary battery, the top portion of the cylindrical can 142 is open. Therefore, during the assembly process of the cylindrical cells 140, the electrode assembly and the center pin may be inserted into the cylindrical can 142 together with an electrolyte. The cylindrical can 142 may be made of, for example, steel, stainless steel, aluminum, aluminum alloy, or an equivalent thereof but is not limited to.

In one or more embodiments, to prevent or reduce the cap assembly 149 from escaping to the outside (e.g., being separated from the cylindrical can 142), with respect to the cap assembly 149, the cylindrical can 142 may include a beading part (e.g., a bead) 144 recessed toward the inside at the bottom portion of the cap assembly 149 and a crimping part (e.g., a crimp) 146 bent inwardly at the top or upper portion thereof.

The electrode assembly may be accommodated inside the cylindrical can 142. The electrode assembly may include a negative electrode plate coated with a negative electrode active material (e.g., graphite, carbon, and/or the like) on a negative electrode current collector plate, a positive electrode plate coated with a positive electrode active material (e.g., a transition metal oxide, such as LiCoO₂, LiNiO₂, LiMn₂O₄, and/or the like) on a positive electrode current collector plate, and a separator positioned between the negative electrode plate and the positive electrode plate to prevent or reduce a short circuit therebetween while allowing the movement of lithium ions therethrough. In one or more embodiments, the negative electrode plate, the positive electrode plate, and the separator may be wound in a substantially cylindrical shape. In one or more embodiments, the negative electrode current collector may be made of copper (Cu) foil, the positive electrode current collector may be made of aluminum (Al) foil, and the separator may be made of polyethylene (PE) or polypropylene (PP), but the present disclosure is not limited thereto.

In one or more embodiments, a negative electrode tab protruding and extending a certain length (e.g., a suitable length) downwardly from the electrode assembly may be welded to the negative electrode plate, and a positive electrode tab protruding and extending a certain length (e.g., a suitable length) upwardly from the electrode assembly may be welded to the positive electrode plate, but an opposite configuration is also possible in some embodiments. In one or more embodiments, for example, the negative electrode tab may be made of copper (Cu) or nickel (Ni), and the positive electrode tab may be made of aluminum (Al), but the present disclosure is not limited thereto.

In one or more embodiments, the negative electrode tab of the electrode assembly may be welded to the bottom part of the cylindrical can 142. Therefore, the cylindrical can 142 may act as a negative electrode. Alternatively, in some embodiments, the positive electrode tab may be welded to the bottom part of the cylindrical can 142, and in such embodiments, the cylindrical can 142 may act as a positive electrode.

In one or more embodiments, the cylindrical cells 140 may include a first insulation plate coupled to the cylindrical can 142, may have a first hole in substantially the center and one or more second holes outside (e.g., peripheral to the center) thereof, and may be interposed between the electrode assembly and the bottom part. The first insulation plate may prevent the electrode assembly from electrically contacting the bottom part of the cylindrical can 142. By way of example, the first insulation plate may prevent the positive electrode plate of the electrode assembly from electrically contacting the bottom part. The first hole allows the gas to quickly move upwardly through the center pin if (or when) a large amount of gas is generated due to an abnormality of the cylindrical cells 140, and the one or more second holes allow the negative electrode tab to penetrate (or extend) therethrough and be welded to the bottom part.

In one or more embodiments, the cylindrical cells 140 may include a second insulation plate coupled to the cylindrical can 142, having a first hole in the center and a plurality of second holes formed outside thereof (e.g. located peripherally to the center), and may be interposed between the electrode assembly and the cap assembly 149. The second insulation plate may prevent the electrode assembly from electrically contacting the cap assembly 149. By way of example, the second insulation plate may prevent the negative electrode plate of the electrode assembly from electrically contacting the cap assembly 149. The first hole allows the gas to quickly move toward the cap assembly 149 if (or when) a large amount of gas is generated due to an abnormality of the secondary battery, and the second holes allow the positive electrode tab to penetrate (or extend) therethrough and be welded to the cap assembly 149. In one or more embodiments, the remaining second holes allow an electrolyte to quickly flow into the electrode assembly in an electrolyte injection process.

In one or more embodiments, the diameters of the first holes and the diameters of the first and second insulation plates are formed to be smaller than the diameter of the center pin, thereby preventing or reducing the center pin from electrically contacting the bottom part of the cylindrical can 142 or the cap assembly 149 due to an external impact.

The center pin has a shape of a hollow circular pipe and may be coupled to the center of the electrode assembly. The center pin may be made of, for example, steel, stainless steel, aluminum, an aluminum alloy, or polybutylene terephthalate, but the present disclosure is not limited thereto. The center pin suppresses (or prevents) deformation of the electrode assembly during charging and discharging of the battery and acts as a passage for gas generated inside the secondary battery. In some embodiments, the center pin may not be provided.

The cap assembly 149 may include a top plate 148, a middle plate, an insulation plate, and a bottom plate.

The middle plate is located below the top plate 148 and may have a substantially flat shape.

When viewed from the bottom, the insulation plate may be formed in a circular ring shape having a suitable width (e.g., a set or predetermined width). In one or more embodiments, the insulation plate insulates the middle plate and the bottom plate from each other. The insulation plate may be interposed between, for example, the middle plate and the bottom plate to then be ultrasonically welded, but the present disclosure is not limited thereto.

The cylindrical cells 140 may be coated with a material including at least one of nickel (Ni) or tin (Sn). As a result, the corrosion of the cylindrical cells 140 may be prevented or reduced. The present disclosure is not limited thereto, and the cylindrical cells 140 may be coated with a polymer material such as polyvinylidene fluoride (PVDF), polyethylene terephthalate (PET), or polytetrafluoroethylene (PTFE), a rubber material, a ceramic material such as an aluminum oxide or a titanium oxide, and/or the like.

FIG. 4 illustrates an example in which potting material is applied utilizing an applicator 400 according to one or more embodiments of the present disclosure.

The potting material may be injected and/or applied to an application surface 420 where at least a portion of the top surface of the cylindrical cell and the cell holder surface is exposed externally. The application surface 420 is illustrated as being flat, but the detailed structure thereof is not provided for ease of explanation. The applicator 400 is illustrated as injecting and/or applying the potting material from a direction normal (e.g., perpendicular) to the application surface 420, but the present disclosure is not limited thereto.

The potting material applied by the applicator 400 may include, but is not limited to, an epoxy resin, a silicone material, polyurethanes, an acrylic resin, and/or any suitable combination thereof. In some embodiments, the potting material injected and/or applied to the application surface 420 may include an insulating material. Therefore, even in a case where one cylindrical cell is ignited, the ignition may be prevented or reduced from spreading to adjacent cylindrical cells. In one or more embodiments, the potting material may include flame retardant material.

By injecting and/or applying the potting material to the application surface 420 utilizing the applicator 400, the cylindrical cells 140 and the cell holder 150 may be blocked and sealed from the outside. The potting material may be injected and/or applied up to the height of a lower case 410. The lower case 410 may guide or determine the injection amount of the potting material.

FIG. 5 illustrates an example in which a potting material 540 is applied according to one or more embodiments of the present disclosure. Cylindrical cells 520 may be supported by recesses 512 and a cell holder 530 of a lower case 510 forming the secondary battery module, and the potting material 540 may be applied to seal the cylindrical cells 520 and the cell holder 530. In some embodiments, the potting material 540 may be applied to the upper surfaces of the cylindrical cells 520 and at least a portion of the surface of the cell holder 530. The potting material 540 may be applied on one open side of the lower case 510 and in parallel to the open side.

As shown in the drawings, the top surface (and/or the cell holder 530) of the cylindrical cells 520 may be lower than the side height of the lower case 510. As a result, in a case where the potting material 540 is applied to the top surface of the cylindrical cells 520, the problem of the potting material 540 overflowing from the lower case 510 may be prevented or reduced, and an appropriate or suitable amount of application may be guided by the sides of the lower case 510. In one or more embodiments, the cylindrical cells 520 may be sealed only with the lower case 510 of the secondary battery module utilizing the potting material 540.

As a result, the corrosion of the cylindrical cells 520 may be effectively prevented or reduced without performing a tubing process on the cylindrical cells 520, thereby not only simplifying the process but also reducing the cost of performing the tubing process. It should be noted that this does not exclude performing the tubing process, and in some embodiments, the corrosion of the cylindrical cells 520 may be more effectively further prevented or reduced by also performing the tubing process. In one or more embodiments, in a case where an upper case of the secondary battery module is further combined with the tubing process, the cylindrical cells 520 may be sealed more tightly.

The cylindrical cells 520 may be electrically connected to busbars, and the cylindrical cells 520 may be connected to the busbars by wire bonding. In one or more embodiments, the cylindrical cells 520 may be connected to a battery management system (BMS) 550 by wire bonding 560.

At least a portion of the wire bonding 560 connected to the busbars and/or the wire bonding 560 connected to the battery management system 550 may be positioned inside the potting material 540. In other words, the potting material 540 may also be applied to the wire bonding 560, thereby also preventing or reducing the corrosion of the bonding wires.

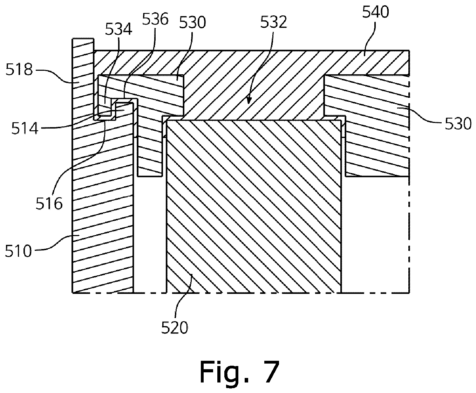

FIG. 6 illustrates an example in which the cylindrical cells 520 are sealed with the potting material 540 according to one or more embodiments of the present disclosure. Referring to FIGs. 6 and 7, it should be understood that the gap shown between the cylindrical cell 520 and the cell holder 530 and between the lower case 510 and the cell holder 530 may be exaggerated for a better understanding of the present disclosure. In some embodiments, such gaps may exist in portions where the components are adjacent to each other. Accordingly, FIGs. 6 and 7 illustrate cross-sectional views of the portions or areas where the gaps exist.

The cell holder 530 is provided with open areas 532 each of which exposes at least a portion of the top surface of the corresponding cylindrical cell 520, and potting material 540 may be applied to the open areas 532 provided in the cell holder 530. Because the potting material 540 may be in a liquid state prior to curing, the applied potting material 540 may flow into the gaps between the cylindrical cells 520 and the cell holder 530 and then cure, thereby sealing the gaps between the cylindrical cells 520 and the cell holder 530.

In one or more embodiments, the potting material 540 may seal the gap between the lower case 510 and the cell holder 530. By applying the potting material 540 between a side of the lower case 510 and the cell holder 530, the potting material 540 may flow into the gap between the lower case 510 and the cell holder 530 and then cure, thereby sealing the gap between the lower case 510 and the cell holder 530.

As a result, the potting material 540 may seal the cylindrical cells 520 and the cell holder 530 on the open side of the lower case 510.

FIG. 7 illustrates an example in which the cell holder 530 is coupled to the lower case 510 according to one or more embodiments of the present disclosure. In some embodiments, a first concave-convex portion is provided on a side of the lower case 510, a second concave-convex portion is provided on a portion of the cell holder 530 in contact with the side of the lower case 510, and the lower case 510 and the cell holder 530 may be coupled to each other by means of the first concave-convex portion of the lower case 510 and the second concave-convex portion of the cell holder 530.

For example, the first concave-convex portion may include a first concave portion 516 and a first protrusion 514 extending from the first concave portion 516, and the first protrusion 514 may be configured to face and be parallel to a side surface 518 of the lower case 510.

Similarly, the second concave-convex portion may include a second recess 536 and a second protrusion 534 extending from the second recess 536. The first concave portion 516 and the second protrusion 534 may be engaged with and coupled to each other, and the first protrusion 514 and the second concave 536 may be engaged with and coupled to each other. The second protrusion 534 may be engaged with the first recess in a direction parallel to the first protrusion 514. Thereafter, the potting material 540 may be applied to the top surfaces of cylindrical cells 520 and at least a portion of the surface of cell holder 530.

Accordingly, the lower case 510 and the cell holder 530 may be coupled to each other by the first concave-convex portion of the lower case 510 and the second concave-convex portion of the cell holder 530, so that the lower case 510 and the cell holder 530 may be coupled to each other more firmly, and a stronger seal may be formed by the potting material 540.

The concave-convex structure of the lower case 510 and the cell holder 530 is not limited to that shown in FIGs. 6-7 and described above, and may have any structure by which the lower case 510 and the cell holder 530 may be coupled to each other.

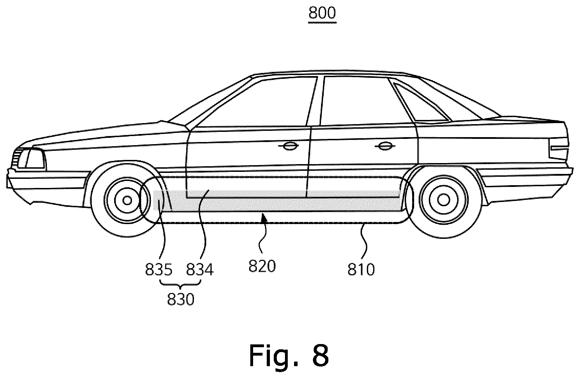

FIG. 8 illustrates a schematic side view showing a vehicle 800 according to one or more embodiments of the present disclosure. FIG. 8 shows a vehicle body and vehicle body parts having a secondary battery pack 830 according to one or more embodiments of the present disclosure. The secondary battery pack 830 may include a secondary battery module (e.g., the secondary battery module 100 shown in FIGs. 1 and 2) according one or more embodiments of the present disclosure.

In FIG. 8, a secondary battery pack 830 may include a secondary battery pack cover 834, which is a part of a vehicle underbody 820, and a pack frame 835 located under the vehicle underbody 820. The pack frame 835 and the secondary battery pack cover 834 may be integrally formed with a vehicle floor 810.

The vehicle underbody 820 separates the inside and outside of a vehicle, and the pack frame 835 may be arranged outside the vehicle.

A vehicle 800 may be formed by combining additional parts, such as a hood in front of the vehicle and fenders respectively located in the front and rear of the vehicle to a vehicle body.

The vehicle 800 may further include other vehicle body parts such as a vehicle floor 810, which includes the secondary battery pack 830 including the pack frame 835 and the secondary battery pack cover 834.

Although the present disclosure has been described with reference to one or more embodiments and drawings illustrating features thereof, the present disclosure is not limited thereto. Various modifications and variations may be made by a person skilled in the art to which the present disclosure belongs within the scope of the claims.

## Claims

1. A secondary battery module (100) comprising:
a plurality of cylindrical cells (140, 520);
a cell holder (150, 530) holding the plurality of cylindrical cells (140, 520); and
a first case (110) accommodating the plurality of cylindrical cells (140, 520) and the cell holder (150, 530), the first case (110) comprising an open side,
wherein potting material (540) is applied to at least a portion of top surfaces of the plurality of cylindrical cells (140, 520) and a surface of the cell holder (150, 530) to seal the plurality of cylindrical cells (140, 520) and the cell holder (150, 530).

2. The secondary battery module (100) as claimed in claim 1, wherein the cell holder (150, 530) comprises a plurality of open areas (,152 532) through which at least a portion of the top surfaces of the plurality of cylindrical cells (140, 520) are accommodated in the first case (110), and
the potting material (540) is applied to the plurality of open areas (152, 532) to seal a gap between the plurality of cylindrical cells (140, 520) and the cell holder (150, 530).

3. The secondary battery module (100) as claimed in claim 1 or 2, wherein the potting material (540) seals a gap between the first case (110) and the cell holder (150, 530).

4. The secondary battery module (100) as claimed in any one of the preceding claims, wherein the potting material (540) comprises an insulating material.

5. The secondary battery module (100) as claimed in any one of the preceding claims, wherein the top surfaces of the plurality of cylindrical cells (140, 520) are lower than a side height of the first case (110).

6. The secondary battery module (100) as claimed in any one of the preceding claims, wherein:
a side of the first case (110) comprises a first concave-convex portion,
a portion of the cell holder (150, 530) in contact with the side of the first case comprises a second concave-convex portion, and
the first case (110) and the cell holder (150, 530) are coupled to each other by the first concave-convex portion of the first case (110) and the second concave-convex portion of the cell holder (150, 530).

7. The secondary battery module (100) as claimed in claim 6, wherein:
the first concave-convex portion comprises a first recess (516) and a first protrusion (514) extending from the first recess (516),
the second concave-convex portion comprises a second recess (536) and a second protrusion (534) extending from the second recess (536), and
the first recess (516) is engaged with and coupled to the second protrusion (534), and the first protrusion (514) is engaged with and coupled to the second recess (536).

8. The secondary battery module (100) as claimed in claim 7, wherein:
the first protrusion (514) faces and is parallel to a side surface (518) of the first case (110), and
the second protrusion (534) is engaged with the first recess (516) in a direction parallel to the first protrusion (514).

9. The secondary battery module (100) as claimed in any one of the preceding claims, further comprising a battery management system (550), wherein the battery management system (550) is connected to the plurality of cylindrical cells (140, 520) by a first wire bonding (560).

10. The secondary battery module (100) as claimed in claim 9, wherein at least a portion of the first wire bonding (560) is in the applied potting material (540).

11. The secondary battery module (100) as claimed in any one of the preceding claims, further comprising busbars (160) electrically connected to the plurality of cylindrical cells (140, 520), wherein the plurality of cylindrical cells (140, 520) are connected to the busbars (160) by a second wire bonding (154).

12. The secondary battery module (100) as claimed in claim 11, wherein the second wire bonding (154) is in the applied potting material (540).

13. The secondary battery module (100) as claimed in any one of the preceding claims, wherein the first case (110) comprises a cell support at a bottom surface of the first case (110) to support the plurality of cylindrical cells (140, 520),
the cell support comprises a plurality of recesses (512) each configured to accommodate at least a portion of a corresponding cylindrical cell (140, 520) of the plurality of cylindrical cells (140, 520), and
the portion of the cylindrical cell (140, 520) comprises a bottom surface of the cylindrical cell (140, 520).

14. The secondary battery module (100) as claimed in claim 13, wherein:
the cell holder (150, 530) comprises a plurality of fixing portions fixing the plurality of cylindrical cells (140, 520), and
an arrangement of the plurality of recesses (512) corresponds to the arrangement of the plurality of fixing portions.

15. The secondary battery module (100) as claimed in any one of the preceding claims, further comprising a second case (120) coupled to the first case (110), wherein the second case (120) is configured to close the open side of the first case (110).
